Europäisches Patentamt

(19) European Patent Office

Office européen des brevets

(11) Publication number: **0 010 685**
**B1**

(12) **EUROPEAN PATENT SPECIFICATION**

(45) Date of publication of patent specification: **16.03.83**

(51) Int. Cl.³: **B 26 F 1/40,** H 02 K 15/02, H 01 F 41/02

(21) Application number: **79103999.3**

(22) Date of filing: **16.10.79**

(54) **Punch and winding machine.**

(30) Priority: **18.10.78 AU 6456/78**

(43) Date of publication of application:
**14.05.80 Bulletin 80/10**

(45) Publication of the grant of the patent:
**16.03.83 Bulletin 83/11**

(84) Designated Contracting States:
**AT BE CH DE FR GB IT LU NL SE**

(56) References cited:
**AT - B - 208 949**
**CH - A - 237 074**
**DE - C - 700 879**
**FR - A - 1 155 050**
**GB - A - 1 352 581**
**US - A - 2 356 972**

(73) Proprietor: **Card-O-Matic Pty Ltd.**
**20 McEnvoy Street**
**Waterloo New South Wales, 2017 (AU)**

(72) Inventor: **Stanley, Louis**
**22 Ponyara Road**
**Beverly Hills, New South Wales 2209 (AU)**

(74) Representative: **Baillie, Iain Cameron et al,**
**c/o Ladas & Parry Isartorplatz 5**
**D-8000 München 2 (DE)**

## Punch and winding machine

Due to the desirability of using a wound roll of punched metal strip in a wide range of devices that require radially extending slots such as electromechanical devices, for example, electric mots and transformers, there is a need for a machine to wind such rolls. When the strip is being wound it is desirable to align the recesses so that on the roll the recesses combine to define a slot or passage. In particular, it is desirable to align the recesses radially so as to form a radially extending slot. Additionally, it is desirable to be able to control aligning of the recesses to also form curved slots, that is slots that extended radially as well as angularly. It is also desirable to produce a roll that has internal cavities.

When winding these rolls the path of the strip approximates a spiral, however, in practice it is a closer approximation to describe each layer of strip as following a circle that is stepped at its end in order to start the next layer.

Devices have been proposed in an attempt to wind such rolls, however, they have failed to appreciate the above and thus have not been successful in positioning the holes to control the formation of the slots in the roll. Thus U.S.—A—2 356 972 discloses a device which winds a metal strip into a roll with the aim of aligning holes in the strip to form radially extending slots in the roll. However, the device of this U.S. patent employs a spring of varying rate to control the tension in the strip with the result that positioning of the holes is not accurately controlled. Thus slots are not correctly formed. It is an object of a first aspect of the present invention to overcome or substantially ameliorate the above disadvantages.

This invention provides a solution to the problems hereinbefore indicated by providing a punch and winding machine (101) to manufacture a roll (102) of punched strip (103), said machine (101) including a main frame (112), a punching assembly (105) mounted on the main frame (112) and adapted to receive said strip (103) and punch holes (107) therein at predetermined intervals along the strip (103) as the strip (103) is drawn through the punching assembly (105), a winding assembly (106) adapted to receive the punched strip (103) and wind it into said roll (102), said winding assembly (106) including a movable frame (116) movably mounted on the main frame (112), a driven shaft (191) rotatably supported on said movable frame (116) and about which said strip (103) is wound so as to feed the strip (103) through the punching assembly (105), said movable frame (116) being restrained to move in a predetermined direction relative to said main frame (112) so that the location of application of the strip (103) to said roll (102) moves only radially with respect to said shaft (191), abutment means (119) located to abut the periphery of the roll (102) and to cause movement of said frame (116) in said predetermined direction, winding drive means (500) for said shaft (191) to cause intermittent rotation thereof, punch drive means (114) for said punching assembly (105), co-ordination means (501) coupling said winding drive means (500) and said punch drive means (114) so that said winding drive means (500) causes rotation of said shaft (191) in between punching operations, bias means (178) biasing said roll (102) to contact said abutment means (119), control means (124, 122) to cause relative movement between said punching assembly (105) and said winding assembly (106) in response to an increase in the diameter of the roll (102) so that the feed rate of the strip (103) to said punching assembly (105) is determined firstly by the diameter and rotation of said roll (102), and secondly by the relative movement between the punching (105) and winding assembly (106), characterised in that said control means (124, 122) includes a first part (122) attached to said movable frame (116) so as to move therewith in said predetermined direction, and a second part (124) attached to the punching assembly (105) or main frame (112) and operatively associated with said first part (122) so as to cause said relative movement in response to movement of said first part (122) in said predetermined direction, and said bias means (178) applies a substantially constant force to said roll (102) in biasing it toward said abutment means (119).

A preferred form of the present invention will now be described by way of example with reference to the accompanying drawings, wherein:

Figure 1 is a schematic perspective elevation of a punching and winding machine;

Figure 2 is a schematic perspective elevation of a further punching and winding machine to that of Figure 1;

Figure 3 is a schematic elevation of a drive mechanism for the machine of Figures 1 and 2;

Figure 4 is a schematic elevation of the winding spigot and drive of the drive mechanism of Figure 3;

Figure 5 schematically illustrates a punch control circuit for the machines of Figures 1 and 2.

The machine 101 is adapted to manufacture a roll 102 formed by laminating a punched strip 103 by means of winding the strip 103 on a spigot 104. The machine 101, for the purposes of this description will be divided into major assemblies, the first assembly is the punching assembly 105 and the second is the winding assembly 106. The punching assembly is adapted to punch a plurality of holes 107 in the blank metal strip 108 to form the punched strip 103. The winding assembly 106 is adapted to wind the punched strip 103 to form the roll 102.

The punching assembly 105 includes a female die member 109 and a male die member 110 which are adapted to punch the holes 107 by movement of portions of the male die member 110 into the female die member 109. The male and female die members 109 and 110 are mounted on a frame 111 which is movably slidably supported by a main frame 112. The frame 111 is guided in its movement on main frame 112 by "V"-shaped slots 113 within which are received projections 112 of corresponding shape. The frame 111 is biased to move in a rightward direction relative to the main frame 112 by means of a spring (not illustrated). The male die member 110 is caused to reciprocate vertically by engagement with a crank arm 114. The crank arm 114 is pivotally attached to the plate 134 and causes the plate 148 to reciprocate vertically. The arm 114 is reciprocated by a rotatably driven crank, which is not illustrated in this particular embodiment.

Turning now to the winding assembly 106 there is depicted the spigot 104 to which is fixed the beginning of the strip 103. The spigot 104 is driven by means of a gear train (not illustrated) which gear train is co-ordinated with the reciprocation of the above-mentioned crank arm 114. More particularly, the spigot 104 is driven by the ratchet wheel 115 which is engaged by means of a reciprocally movable pawl which is caused to reciprocate by connection with the above-mentioned crank so that the ratchet wheel 115 moves intermittently in a clockwise direction. The ratchet wheel 115 is then connected to the spigot 104 by a gear train (not illustrated). Accordingly, the spigot 104 is caused to move intermittently in response to the reciprocation of the crank arm 114. The intermittent rotation of the spigot 104 causes intermittent longitudinal mvoement of the strip 103 relative to the die members 109 and 110 to thereby cause spacing of the holes 107. The ratchet wheel 115 is splined to the shaft 121 to which shaft 121 is fixed means to limit rotation of shaft 121 so that it will only rotate in a clockwise direction. Such a motion limiting device could be any known one way clutch. This is to counteract the tension in the strip 103 which would tend to cause anticlockwise rotation of the roll 102 during formation thereof. The spindle 104 is rotatably supported by a frame 116 of which there is schematically depicted eyelets 118, which receive vertical guides 117. The frame 116 is allowed to move vertically in response to the increase in diameter of the roll 102. This is to maintain the position of application of the strip 103 to the roll 102 relatively constant. By maintaining this position constant there is eliminated any undesirable variations in feed rate due to an increasing distance between the position of application of the strip 103 to the roll 102 and the die members 109 and 110. However, it should be appreciated that the frame 116 is biased to move in a vertical direction by means of a counter balance or hydraulically or compressed air operated ram which causes the outer periphery of the roll 102 to engage the roller 119. It is important in the provision of these means to bias the roll 102 to move in a vertical direction that such vertical force applied to the spigot 104 is relatively constant thereby not increasing the tension in the strip 103. A substantial variation in tension would cause distortion and stretching of the strip and loss of control of alignment of the holes 107 to form the slots 120.

The spacing between the holes 107 determines the location of the holes 107 on the roll 102, while if the holes 107 are to be aligned to form radially extending slots 120 then the distance between the holes 107 must increase as the diameter of the roll 102 increases, given a predetermined number of holes 107 on the circumference of the roll 102. Thus if the frequency of punching is constant then it is necessary to gradually increase the feed rate, which increase is achieved by the gradually increasing diameter of the roll 102 and the constant average angular velocity of the spigot 104. The feed rate of the blank strip 108 to the punching assembly 105 is governed by two factors. The majority of the feed rate results from the intermittent rotation of the drive spigot 104. The roll 102 as it increases in size causes an increase in the feed rate and this accounts for the majority of the increase in distance between the punched holes 107. However, due to the strip 103 not forming an exact spiral on the roll 102, and more particularly, only approximating a plurality of concentric circles joined by a step, it has been found that the feed rate must be incrementally increased beyond that of the increase due to the changing diameter of roll 102. In this particular embodiment this incremental increase is achieved by moving the frame 111 relative to the spigot 104. It has also been found that the incremental increase must be proportional to the diameter of the roll 102 and thus there is provided the cam surface 121 and roller 122. The roller 122 is supported by the arm 123 fixed to the frame 116. As the frame 116 moves downwardly in response to the increasing diameter of the roll 102, the roller 122 moves down and bears against the cam surface 121. This in turn causes rightward movement of the frame 111. The cam surface 121 is defined by a face of the member 124 which is adjustably fixed to the frame 111 at pivot 125. Attached to the member 124 is a calibrated adjustment plate 126 which is engaged by set screw 127 to fix the position of the member 124 and thus the angle of the cam surface 121 relative to the roller 122.

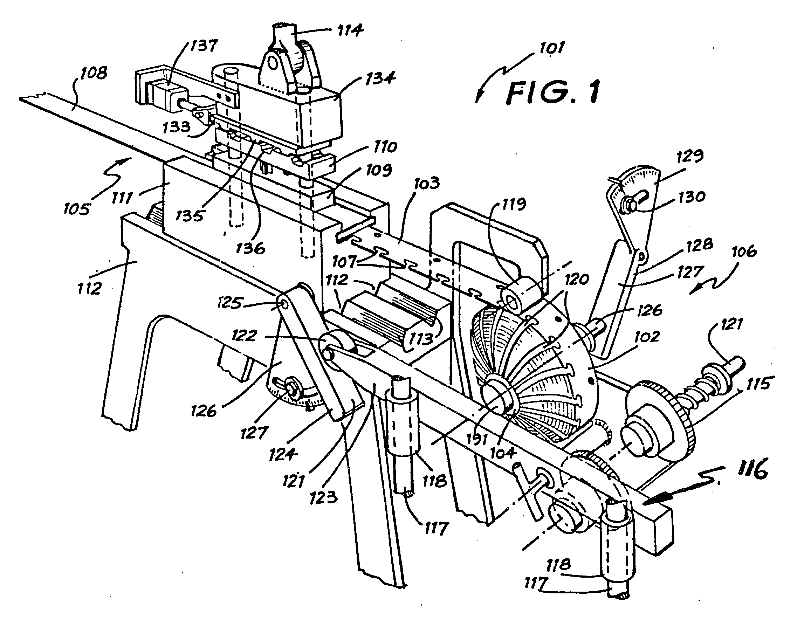

An additional advantage in employing a movable frame 111 is to support the die members 109 and 110 so that the inclination of the cam surface 121 may be varied. This enables the holes 107 to be positioned so that the slots 120 extend angularly as well as radially as can be seen in Figure 1.

In the formation of rolls 102 of punched strip 103 it has been found that it is also desirable to provide the roll 102 with a conical configuration supplied by a sliding motion of the spigot 104 upon the shaft 191 which drives and supports the spigot 104. This driven shaft 190 is in continual driving contact with the spigot 104 by means of a spline. The spigot 104 is provided with an extension 126 which engages a cam surface 127 to cause the movement of the spigot 104. The cam surface 127 is defined by a face of the member 128 which is pivotally mounted on the main frame 112. The angle of the cam face 127 is determined by the adjustment plate 129 which is engaged by set screw 130 to fix the position of the member 128 thereby determining the conical configuration of the roll 102.

In the present arrangement the male die 110 is selectively operated by means of a slide 133 selectively adapted to engage the vertically reciprocated plate 134. In a first position the slide 133 causes vertical movement of the male die 110 by placing the abutments 135 between the male die member 132 and the vertically moving plate 134. In a second position the abutments 135 are located within grooves 136 thereby disengaging the male die member 110 from the vertical moving member 134. Movement of the slide 133 between the above two described positions is achieved by means of a solenoid 139 which solenoid 139 may be controlled either electronically or by means of a mechanical cam and microswitch activated thereby.

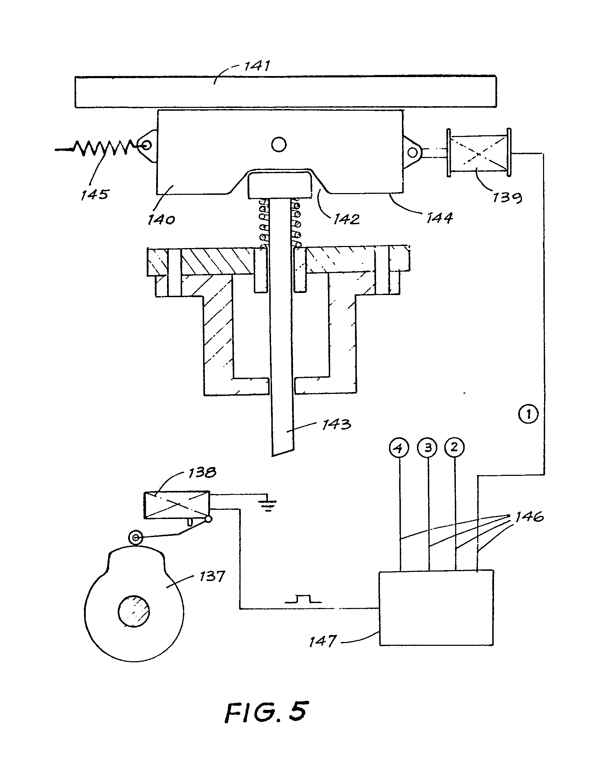

Now with reference to Figure 5 this mechanical cam 137 referred to above would be synchronised with the winding assembly 106.

Again with reference to Figure 5 the cam 137 is caused to rotate in synchronism with spigot 104 and to activate the switch 138. The switch 138 then distributes signals to any number of solenoids 139 to activate slides 140 by means of pulse distributor 147. This modification includes a vertically reciprocating plate 141. The slide 140 has a recess 142 within which the upper end of the male die member 143 is located if not to be activated. However, upon the slide 140 being moved so that the die member 143 no longer enters the recess 142 but engages face 144 the male die member 143 is caused to punch a strip passing beneath it. The slide 140 is caused to move between the above two positions by solenoid 139 acting against spring 145. The outputs 146 of pulse distributor 147 may be connected to other solenoids 139 to activate alternate male die members.

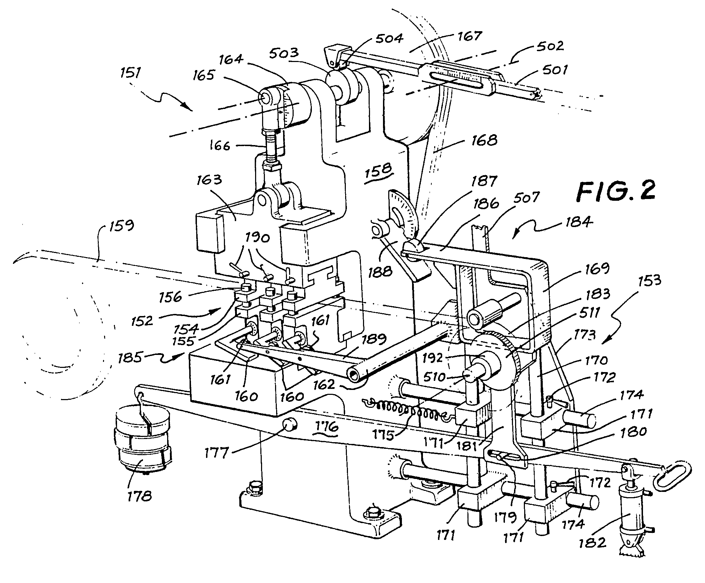

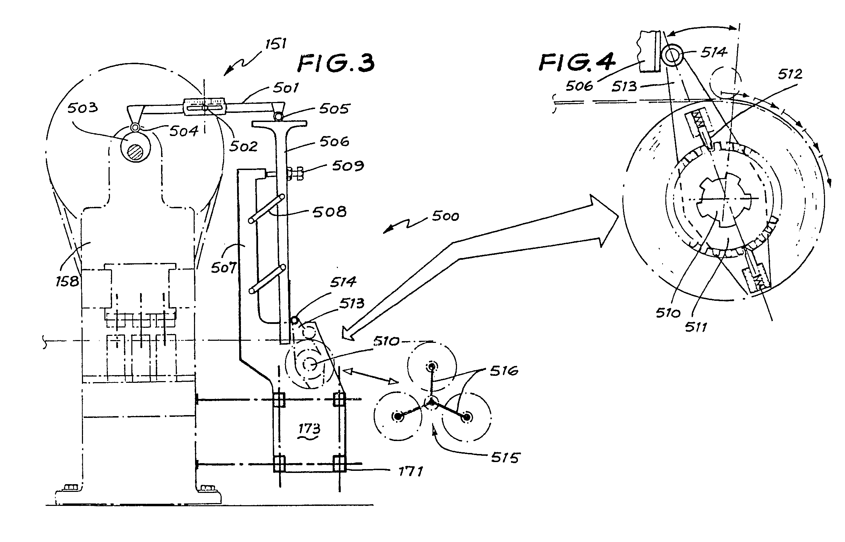

In Figures 2 and 3 there is depicted an alternative machine 151 to that of Figure 1. The machine 151 includes both a punching arrangement 152, a winding arrangement 153. The punching arrangement 152 includes a plurality of male die members 154 and a plurality of female die members 155 coupled by means of guide rods 156 to enable vertical reciprocation of the male die members 154 relative to the female die members 155. Both the female and the male die members 154 and 155 are mounted so as to be slidable relative to the main frame 158 so as to be movable in a direction along the strip 159. The movement of the male and female die members 154 and 155 is governed by means of adjustable cam surfaces 160 engaged by cam rollers 161 which are moved in response to vertical movement of the arm 162. The male die members may be individually fixed to the frame 158 by their respective set screw 190. The male die members 154 are coupled to a vertically reciprocated member 163 which is slidably guided within the main frame 158 and is vertically reciprocated by means of crank 164 and connecting rod 165. The connecting rod 165 is eccentrically pivotably mounted on the crank 164 at pivot pin 165. The crank 164 is driven by fly wheel 167 which in turn is driven by means of belts 168 extending to an electric motor.

The winding device 153 includes a frame 169 which is allowed to move vertically by engagement of rods 170 slidably within guides 171. The winding device 153 which includes the frame 169 rotatably supports the spigot 192.

The guides 171 form part of a sub-frame 173 which is slidably supported by rods 174 fixed to the main frame 158. The rods 174 are selectively slidably received also in guides 171 to enable horizontal movement of the sub-frame 173 relative to the main frame 158. The sub-frame 173 is biased to move in a leftward direction by spring 175. The sub-frame 173 is selectively fixable to the main frame 158 by set screws 172. The frame 169 is biased to move vertically by counterbalance arm 176 being pivoted at pin 177 and having weights 178 secured to one end. The arm 176 engages by means of pin 179, slot 180 of link 181 fixed to the frame 169. Alternatively, the arm 176 may be biased to move vertically by double acting ram 182. It should be appreciated that the force applied to the frame 169 by means of arm 176 must be substantially constant in order to maintain the tension in the strip 159 relatively constant. The only variation in using a counterbalance arm 176 and weights 158 is the increase in weight of the wound roll 183.

As discussed with reference to the machine 101 of Figure 1, in order to control the alignment of punched holes it is necessary, apart from increasing the feed rate by means of increasing the diameter of the wound roll 183, to increase the feed rate by moving the spigot 192 away from the male and female die members 154 and 155. This relative movement may be accomplished by movement control means 184 and/or movement control means 185. Either of these control means 184 or 185 may be disconnected or used in combination with the other control means to combine in causing the relative movement of the spigot 192 relative to the male and female die members 154 and 155. Control means 184 includes arm 186 extending from frame 169 and to which is attached a roller 187 to engage cam surface 188 which may be adjusted in inclination to cause varying degrees of horizontal movement of the frame 169 in response to vertical movement of the frame 169 resulting from the increasing diameter of the wound roll 183. The control means 185 includes arm 189 which is fixed to rod 162 so as to move therewith. Attached to the end of the arm 189 are the rollers 161. The rollers 161 engage cam surfaces 160 to cause relative movement between the spigot 192 and the male and female die members 154 and 155. It should be appreciated that the two control means 184 and 185 have been provided so that the machine 151 may be used to wind large diameter rolls 183. The machine 101 of Figure 1 by only being provided with the one control means is only suitable to wind relatively small diameter rolls. It should further be appreciated that by manipulation of the various set screws 172 and 190 together with the cam surfaces 188 and 160 and their respective rollers 187 and 161, the machine 151 may be configured to punch a wide variation of holes in varying locations.

Further to the above the machine 151 could be adapted to have a slide arrangement similar to that of Figure 1 and a control mechanism according to Figure 5 to further increase its range of operation.

Now with reference to Figures 3 and 4, the machine 151 has a winding drive mechanism 500 which includes a rocker arm 501 pivotally mounted on the main frame 158 by pin 502. One end of the arm 501 engages cam 503 by means of a roller 504 so as to be angularly reciprocated. The other end of arm 501 has a roller 505 which engages vertically movable member 506 to cause vertical reciprocation thereof. However, member 506 is pivotally attached to base 507 by links 508 so that in moving vertically, the member 506 also moves horizontally. The member 506 is limited in its movement by adjustment screw 509. The member 506 is attached to sub-frame 173 so as to be horizontal therewith. Horizontal movement of the member 506 is transferred into rotary motion of the shaft 510 by ratchet wheel 511 and pawl 512. The pawl 512 is rotated about shaft 510 by angular reciprocation of arm 513 which by means of roller 514 is caused to reciprocate by member 506. The ratchet wheel 511 is splined together with spigot 192 to shaft 510.

The spigot 192 may be one of many spigots mounted on a rotatable turret 515 having arms 516 to support the spigots. In this manner the manufacture of rolls may be quickened.

## Claims

1. A punch and winding machine (101) to manufacture a roll (102) of punched strip (103), said machine (101) including a main frame (112), a punching assembly (105) mounted on the main frame (112) and adapted to receive said strip (103) and punch holes (107) therein at predetermined intervals along the strip (103) as the strip (103) is drawn through the punching assembly (105), a winding assembly (106) adapted to receive the punched strip (103) and wind it into said roll (102), said winding assembly (106) including a movable frame (116) movably mounted on the main frame (112), a driven shaft (191) rotatably supported on said movable frame (116) and about which said strip (103) is wound so as to feed the strip (103) through the punching assembly (105), said movable frame (116) being restrained to move in a predetermined direction relative to said main frame (112) so that the location of application of the strip (103) to said roll (102) moves only radially with respect to said shaft (191), abutment means (119) located to abut the periphery of the roll (102) and to cause movement of said frame (116) in said predetermined direction, winding drive means (500) for said shaft (191) to cause intermittent rotation thereof, punch drive means (114) for said punching assembly (105), co-ordination means (501) coupling said winding drive means (500) and said punch drive means (114) so that said winding drive means (500) causes rotation of said shaft (191) in between punching operations, bias means (178) biasing said roll (102) to contact said abutment means (119), control means (124, 122) to cause relative movement between said punching assembly (105) and said winding assembly (106) in response to an increase in the diameter of the roll (102) so that the feed rate of the strip (103) to said punching assembly (105) is determined firstly by the diameter and rotation of said roll (102), and secondly by the relative movement between the punching (105) and winding assembly (106), characterised in that said control means (124, 122) includes a first part (122) attached to said movable frame (116) so as to move therewith in said predetermined direction, and a second part (124) attached to the punching assembly (105) or main frame (112) and operatively associated with said first part (122) so as to cause said relative movement in response to movement of said first part (122) in said predetermined direction, and said bias means (178) applies a substantially constant force to said roll (102) in biasing it toward said abutment means (119).

2. The machine of claim 1 wherein the first and second parts of said control means include a cam surface (121) attached to either said punching assembly (105) or movable frame (116), an engaging member (122) attached to the other of said punching assembly or movable frame and positionable to engage said cam surface (121) to cause the relative movement between said punching assembly (105) and said movable frame (116).

3. The machine of claim 1 or 2 wherein said co-ordination means (Fig. 5) causes the frequency of punching operations to remain constant relative to the average speed of rotation of said shaft (121).

4. The machine of claim 1, 2 or 3, wherein said punching assembly (105) includes a male (110) and a female (109) die member, a male die support member supporting said male die member and being movably mounted on said main frame for reciprocation in a direction normal to the plane of the strip (108) adjacent said female die member (109), and wherein said male die member (110) is movably supported by said support member so as to be movable in a direction along said strip while being reciprocated thereby, said female die member (109) being movably supported by said main frame (112) so as to also be movable in a direction along said strip (108), and further including linkage means coupling said male and female die members so that they move together along said strip, and wherein said control means governs the movement of the male and female die members along the strip to cause the relative movement between the punching (105) and winding (116) assemblies.

5. The machine of claim 1, 2, 3 or 4 wherein said movable frame (116) is adapted to move in a second direction normal to said predetermined direction and the axis of said shaft (191) so as to cause the relative movement between the punching and winding assemblies, and wherein said control means determines the movement of said movable frame (116) in said second direction in response to the increase in diameter of said roll (102).

6. The machine of any one of claims 1 to 5 wherein said bias means includes a lever (176) pivoted intermediate its ends, force means (178, 182) to apply a substantially constant force to one end of the lever, and wherein said lever bears against said movable frame (169) to bias it against said abutment means.

7. The machine of claim 6 wherein said force applying means is a weight (178).

8. The machine of any one of claims 1 to 5 wherein said bias means includes a ram (182) which is operated by a fluid under pressure.

9. The machine of any one of claims 1 to 8 further including a hollow cylindrical base (104) co-axially slidably mounted on said shaft (191) and upon which said strip (108) is wound, said base being in driving engagement with said shaft and movable longitudinally thereof, and conical control means (128) to move said base longitudinally of said shaft so that said roll is formable with substantially conical end faces.

10. The machine of claim 9 wherein said conical control means is a cam surface (127) adapted to engage said base (104) to move same in response to movement of said movable frame (116) in said predetermined direction.

11. The machine of any one of claims 1 to 10 wherein said punching assembly (105) includes a plurality of male (154) and female (155) die members, said control means (160, 161, 162) is adapted to individually control the relative movement of each male die member and its respective female die member with respect to the winding assembly.

12. The machine of claim 11 including selection means (172, 190) to cause selective actuation of desired male dies.

13. The machine of claim 12 including selection control means (160, 161, 187, 188) to coordinate said selection means with said rotation of said shaft.

14. The machine of claim 3 wherein winding drive means includes a ratchet wheel (115) to drive said shaft (121), a pawl reciprocated and engageable with said ratchet wheel to cause intermittent rotation thereof, and means to limit said shaft to rotate only in a winding direction.

15. The machine of any one of claims 1 to 14 wherein said abutment means (119) engages the roll (102) adjacent the position of application of the strip to the roll.

### Patentansprüche

1. Ausschneide- und Aufwickelmaschine (101) zum Herstellen einer Rolle (102) aus gelochtem Band (103), mit einem Hauptgestell (112), einer auf dem Hauptgestell (112) montierten Ausschneideanordnung (105), die geeignet ist, das Band (103) aufzunehmen und beim Ziehen des Bandes (103) durch die Ausschneideanordnung (105) aus dem Band aus diesem Löcher (107) in vorherbestimmten Abständen längs des Bandes (103) auszuschneiden, einer Aufhaspelanordnung (106), die geeignet ist, das gelochte Band (103) aufzunehmen und zu der Rolle (102) aufzuwickeln, wobei die Aufhaspelanordnung (106) ein bewegbares Gestell (116) besitzt, das auf dem Hauptgestell (112) bewegbar gelagert ist, eine auf dem bewegbaren Rahmen (116) drehbar gelagerte, angetriebene Welle (191), um welche das Band (103) so herumgewickelt wird, daß sie das Band (103) durch die Ausschneideanordnung (105) vorzieht, wobei das bewegbare Gestell (116) so geführt ist, daß es nur in einer vorherbestimmten Richtung relativ zu dem Hauptgestell (112) bewegbar ist und die Stelle, an der das Band (103) auf die Rolle (102) aufläuft, sich in Bezug auf die Welle (191) nur radial bewegt, ferner mit zur Anlage am Umfang der Rolle (102) und zum Bewegen des Gestells (116) in der vorherbestimmten Richtung geeigneten Widerlagermittel (119), einem Haspelantrieb (500) zum schrittweisen Drehen der Welle (191), einem Stempelantrieb (114) für die Ausschneideanordnung (105), einer Koordiniereinrichtung (501), welche den Haspelantrieb (500) und den Stempelantrieb (114) derart kuppelt, daß der Haspelantrieb (500) zwischen den Ausschneidevorgängen eine Drehung der Welle (191) bewirkt, einer Vorbelastungseinrichtung (178) zum Vorbelasten der Rolle (102) derart, daß sie die Widerlagermittel (119) berührt, und einer Steuereinrichtung (124, 122) zum Herbeiführen einer Relativbewegung zwischen der Ausschneideanordnung (105) und der Aufhaspelanordnung (106) auf Grund einer Zunahme des Durchmessers der Rolle (102) derart, daß die Geschwindigkeit des Zulaufes des Bandes (103) zu der Ausschneideanordnung (105) erstens durch den Durchmesser und die Drehzahl der Rolle (102) und zweitens durch die Relativbewegung zwischen der Ausschneideanordnung (105) und der Aufhaspelanordnung (106) bestimmt wird, dadurch gekennzeichnet, daß die Steuereinrichtung (124, 122) einen ersten Teil (122) besitzt, der an dem bewegbaren Gestell (116) angebracht ist und sich mit ihm in der genannten, vorherbestimmten Richtung bewegt, und einen zweiten Teil (124), der an der Ausschneideanordnung (105) oder dem Hauptgestell (112) angebracht und dem ersten Teil (122) funktionell derart zugeordnet ist, daß er auf Grund einer Bewegung des ersten Teils (122) in der genannten vorherbestimmten Richtung die genannte Relativbewegung herbeiführt, und daß die Vorbelastungseinrichtung (178) auf die von ihr zu den Widerlagermitteln (119) hin vorbelastete Rolle (102) eine im wesentlichen konstante Kraft ausübt.

2. Maschine nach Anspruch 1, dadurch gekennzeichnet, daß der erste und zweite Teil der Steuereinrichtung eine Kurvenfläche (121) besitzten, die an der Ausschneideanordnung (105) oder dem beweglichen Gestell (116) angebracht ist, ferner einen Kurvenabnehmer (122), der an dem anderen der aus der Ausschneideanordnung und dem bewegbaren Gestell bestehenden Teile angebracht und in eine Stellung bewegbar ist, in der er an der Kurvenfläche (121) angreift und die Relativbewegung zwischen der Ausschneideanordnung (105) und dem bewegbaren Gestell (116) herbeiführt.

3. Maschine nach Anspruch 1 oder 2, dadurch gekennzeichnet, daß die Koordiniereinrichtung (Figur 5) die auf die durchschnittliche Drehzahl der Welle (121) bezogene Frequenz der Ausschneidevorgänge konstant hält.

4. Maschine nach Anspruch 1, 2 oder 3, dadurch gekennzeichnet, daß die Ausschneideanordnung (105) einen Schnittstempel (110) und einen Schnittplatte (109) besitzt, ferner einen den Schnittstempel tragenden Stempelträger, der auf dem Hauptgestell in einer zu der Ebene des im Bereich der Schnittplatte (109) befindlichen Bandes (108) normalen Richtung hin- und herbewegbar gelagert ist, und daß der Schnittstempel (110) in dem Stempelträger derart bewegbar gelagert ist, daß der Schnittstempel bei seiner hin- und hergehenden Bewegung durch den Stempelträger auch längs des Bandes bewegbar ist, daß die Schnittplatte (109) in dem Hauptgestell (112) derart bewegbar gelagert ist, daß sie ebenfalls längs des Bandes (108) bewegbar ist, daß ein Gestänge vorgesehen ist, das den Schnittstempel und die Schnittplatte derart miteinander kuppelt, daß sie sich gemeinsam längs des Bandes bewegen, und daß die Steuereinrichtung die Bewegung des Schnittstempels und der Schnittplatte längs des Bandes derart steuert, daß die Relativbewegung zwischen der Ausschneideanordnung (105) und der Aufhaspelanordnung (116) herbeigeführt wird.

5. Maschine nach Anspruch 1, 2, 3 oder 4, dadurch gekennzeichnet, daß das bewegbare Gestell (116) in einer zu der genannten vorherbestimmten Richtung und der Achse der Welle (191) normalen, zweiten Richtung bewegbar ist, um die Relativbewegung zwischen der Ausschneide- und der Aufhaspelanordnung herbeizuführen, und daß die Steuereinrichtung die Bewegung des bewegbaren Gestells (116) in der zweiten Richtung auf Grund der Zunahme des Durchmessers der genannten Rolle (102) bestimmt.

6. Maschine nach einem der Ansprüche 1 bis 5, dadurch gekennzeichnet, daß die Vorbelastungseinrichtung einen Hebel (176) besitzt, der zwischen seinen Enden schwenkbar gelagert ist, ferner eine Kraftausübungseinrichtung (178, 182) zum Ausüben einer im wesentlichen konstanten Kraft auf ein Ende des Hebels, und daß der Hebel an dem bewegbaren Gestell (169) angreift und dieses gegen die Widerlagermittel drückt.

7. Maschine nach Anspruch 6, dadurch gekennzeichnet, daß die Kraftausübungseinrichtung ein Gewicht (178) besitzt.

8. Maschine nach einem der Ansprüche 1 bis 5, dadurch gekennzeichnet, daß die Vorbelastungseinrichtung einen druckmitteldruckbetätigten Stößel (182) besitzt.

9. Maschine nach einem der Ansprüche 1 bis 8, gekennzeichnet durch einen hohlzylindrischen Wickelkern (104), der auf der Welle (191) koaxial und verschiebbar angeordnet ist und um den das Band (108) herumgewickelt wird und der im Antriebseingriff mit der Welle steht und in deren Längsrichtung bewegbar ist, und durch eine konische Steuereinrichtung (128) zum Bewegen des Wickelkerns längs der Welle, so daß die Rolle mit im wesentlichen konischen Stirnflächen ausgebildet werden kann.

10. Maschine nach Anspruch 9, dadurch gekennzeichnet, daß die konische Steuereinrichtung eine Kurvenfläche (127) ist, die an dem Wickelkern (104) angreifen kann, um ihn auf Grund einer in der genannten vorherbestimmten Richtung erfolgenden Bewegung des bewegbaren Gestells (116) zu bewegen.

11. Maschine nach einem der Ansprüche 1 bis 10, dadurch gekennzeichnet, daß die Ausschneideanordnung (105) mehrere Schnittstempel (154) und Schnittplatten (155) besitzt und die Steuereinrichtung (160, 161, 162) geeignet ist, die Bewegung jedes Schnittstempels und der ihm zugeordneten Schnittplatte relativ zu der Aufhaspelanordnung einzeln zu steuern.

12. Maschine nach Anspruch 11, mit einer Vorwähleinrichtung (172, 190) zur Auswahl der zu verwendenden Schnittstempel.

13. Maschine nach Anspruch 12, gekennzeichnet, durch eine Vorwahlsteuereinrichtung (160, 161, 187, 188) zum Koordinieren der Vorwähleinrichtung mit der Drehung der Welle.

14. Maschine nach Anspruch 3, dadurch gekennzeichnet, daß der Haspelantrieb ein Sperrzahnrad (115) zum Antrieb der Welle (121), eine hin- und herbewegbare und zum Eingriff in das Sperrzahnrad geeignete Klinke zum schrittweisen Drehen des Sperrzahnrades und eine Einrichtung umfaßt, die eine Drehung der Welle nur im Aufhaspelsinn gestattet.

15. Maschine nach einem der Ansprüche 1 bis 14, dadurch gekennzeichnet, daß die Widerlagermittel (119) an der Rolle (102) im Bereich der Stelle angreifen, an der das Band auf die Rolle aufläuft.

**Revendications**

1. Machine de poinçonnage et d'enroulement (101) servant à réaliser un rouleau (102) d'une bande perforée (103), ladite machine (101) comportant un châssis principal (112), un ensemble de poinçonnage (105) monté sur le châssis principal (112) et apte à recevoir ladite bande (103) et à y réaliser par poinçonnage des trous (107) à des intervalles prédéterminés le long de la bande (103) lorsque cette dernière est tirée à travers l'ensemble de poinçonnage (105), un ensemble d'enroulement (106) apte à recevoir la bande poinçonnée (103) et à l'enrouler pour former ledit rouleau (102), ledit ensemble d'enroulement (106) comprenant un cadre mobile (116) monté avec possibilité de déplacement sur le châssis principal (112), un arbre entraîné (191) soutenu avec possibilité de rotation sur ledit cadre mobile (116) et autour duquel ladite bande (103) est enroulée de manière à faire avancer la bande à travers l'ensemble de poinçonnage (116), ledit cadre mobile (116) étant contenu de manière à se déplacer dans une direction prédéterminée par rapport audit châssis principal (112) de telle manière que l'emplacement d'application de la bande (103) sur ledit rouleau (102) se déplace uniquement radialement par rapport audit arbre (191), des moyens d'appui (119) disposés de manière à appuyer sur le pourtour du rouleau (102)· et à provoquer le déplacement dudit cadre (116) dans ladite direction prédéterminée, des moyens (500) de commande de l'enroulement pour ledit arbre (191) de manière à entraîner ce dernier en une rotation intermittente, des moyens (114) de commande de poinçonnage pour ledit ensemble de poinçonnage (105), des moyens de coordination (501) accouplant lesdits moyens (500) de commande de l'enroulement et lesdits moyens (114) de commande de poinçonnage de sorte que lesdits moyens (500) de commande de l'enroulement provoquent la rotation dudit arbre (191) entre des opérations de poinçonnage, des moyens de charge (178) repoussant ledit rouleau (102) pour qu'il contacte lesdits moyens d'appui (119), des moyens de commande (124, 122) servant à provoquer un déplacement relatif entre ledit ensemble de poinçonnage (105) et ledit ensemble de bobinage (106) en réponse à un accroissement du diamètre de rouleau (102) de sorte que la vitesse d'avance de la bande (103) vers ledit ensemble de poinçonnage (102) est déterminée en premier lieu par le diamètre et la rotation dudit rouleau (102) et en second lieu par le déplacement relatif entre l'ensemble de poinçonnage (105) et l'ensemble d'enroulement (106), caractérisée en ce que lesdits moyens de commande (124, 122) comportent une première pièce (122) fixée audit cadre mobile (116) de manière à se déplacer avec ce dernier dans ladite direction prédéterminée, et une seconde pièce (124) fixée à l'ensemble de poinçonnage (105) ou au châssis principal (112) et associée de façon opérationnelle à ladite première pièce (122) de manière à provoquer ledit déplacement relatif en réponse au déplacement de ladite première pièce (122) dans ladite direction prédéterminée, et que lesdits moyens de charge (178) appliquent une force essentiellement constante audit rouleau (102) de manière à le repousser vers lesdits moyens d'appui (119).

2. Machine selon la revendication 1, dans laquelle les première et seconde pièces desdits moyens de commande comportent une surface formant came (121) fixée soit audit ensemble de poinçonnage (105), soit audit cadre mobile (116), un organe de contact (122) fixé à l'autre dudit ensemble de poinçonnage ou du cadre mobile et pouvant être positionné de manière à contacter ladite surface formant came (121) afin de provoquer le déplacement relatif entre ledit ensemble de poinçonnage (105) et ledit cadre mobile (116).

3. Machine selon la revendication 1 ou 2, dans laquelle lesdits moyens de coordination (figure 5) agissent en maintenant constante la fréquence des opérations de poinçonnage par rapport à la vitesse moyenne de rotation dudit arbre (121).

4. Machine selon la revendication 1, 2 ou 3, dans laquelle ledit ensemble de poinçonnage (105) comporte un poinçon (110) et une matrice (109), un organe de support du poinçon supportant ledit poinçon et étant monté mobile sur ledit châssis principal pour avoir un déplacement de va-et-vient suivant une direction perpendiculaire au plan de la bande (108) au voisinage de ladite matrice (109), et dans laquelle ledit poinçon (110) est soutenu avec possibilité de déplacement dans ledit organe de support de manière à être déplacable suivant une direction le long de ladite bande tout en étant déplacé selon un mouvement de va-et-vient par rapport à cette dernière, ladite matrice (109) étant soutenue avec possibilité de déplacement par ledit châssis principal (112) de manière à être également mobile suivant une direction le long de ladite bande (108), et comportant en outre des moyens de liaison accouplant ledit poinçon et ladite matrice de manière qu'ils se déplacent ensemble le long de ladite bande, et dans laquelle lesdits moyens de commande régissent le déplacement du poinçon et de la matrice le long de la bande de manière à provoquer le déplacement relatif entre l'ensemble de poinçonnage (105) et l'ensemble d'enroulement (116).

5. Machine selon la revendication 1, 2, 3, 4, dans laquelle ledit cadre mobile (116) peut se déplacer suivant une seconde direction perpendiculaire à ladite direction prédéterminée et à l'axe dudit arbre (191) de manière à provoquer le déplacement relatif entre l'ensemble de poinçonnage et l'ensemble d'enroulement, et dans laquelle lesdits moyens de commande déterminent le déplacement dudit cadre mobile (116) dans ladite seconde direction en réponse à l'accroissement du diamètre dudit rouleau (102).

6. Machine selon l'une quelconque des revendications 1 à 5, dans laquelle lesdits moyens de charge incluent un levier (176) tourillonné entre ses extrémités, des moyens d'application d'une force (178, 182) servant à appliquer une force essentiellement constante à une extrémité du levier, et dans laquelle ledit levier prend appui contre ledit cadre mobile (169) de manière à le repousser contre lesdits moyens d'appui.

7. Machine selon la revendication 6, dans laquelle lesdits moyens d'application d'une force sont un poids (178).

8. Machine selon l'une quelconque des revendications 1 à 5, dans laquelle lesdits moyens de charge incluent un vérin (182) qui est mû par un fluide sous pression.

9. Machine selon l'une quelconque des revendications 1 à 8, comportant en outre un support cylindrique creux (104) monté de façon à pouvoir coulisser coaxialement sur ledit arbre (191) et sur lequel ladite bande (108) est enroulée, ledit support étant lié par une liaison motrice audit arbre et étant déplaçable longitudinalement sur ce dernier, et des moyens coniques de commande (128) destinés à déplacer ledit support longitudinalement sur ledit arbre de manière que ledit rouleau puisse être formé avec des faces d'extrémité essentiellement coniques.

10. Machine selon la revendication 9, dans laquelle lesdits moyens coniques de commande sont une surface formant came (127) apte à contacter ledit support (104) pour déplacer ce dernier en réponse au déplacement dudit cadre mobile (11) dans ladite direction prédéterminée.

11. Machine selon l'une quelconque des revendications 1 à 10, dans laquelle ledit ensemble de poinçonnage (105) comporte plusieurs poinçons (154) et plusieurs matrices (155), lesdits moyens de commande (160, 161, 162) sont aptes à réaliser la commande individuelle du déplacement relatif de chaque poinçon et de sa matrice respective par rapport à l'ensemble d'enroulement.

12. Machine selon la revendication 11, incluant des moyens de sélection (172, 190) destinés à provoquer l'actionnement sélectif du ou des poinçons désirés.

13. Machine selon la revendication 12, incluant des moyens de commande de sélection (160, 161, 187, 188) destinés à coordonner lesdits moyens de sélection avec ladite rotation dudit arbre.

14. Machine selon la revendication 3, dans laquelle les moyens de commande de l'enroulement comprennent une roue à rochet (115) servant à entraîner ledit arbre (121), un cliquet entraîné selon un mouvement de va-et-vient et pouvant être mis en contact avec ladite roue à rochet de manière à provoquer une rotation intermittente de cette dernière, et des moyens pour limiter la rotation dudit arbre uniquement dans une direction d'enroulement.

15. Machine selon l'une quelconque des revendications 1 à 14, dans laquelle les moyens d'appui (119) contactent le rouleau (102) au voisinage du point d'application de la bande sur le rouleau.

*FIG. 1*

FIG.2

2

FIG.3

FIG.4

3

FIG. 5